# DEMANDE DE BREVET EUROPEEN

(11) **EP 0 985 482 A1**
(43) Date de publication de la demande: **15.03.2000**
(21) Numéro de dépôt: 99402230.9
(22) Date de dépôt: 10.09.1999
(51) Int. Cl.: B23K 9/32

(54) **Torche de travail à l'arc électrique sous flux gazeux de protection munie d'une source de rayonnement UV**

(30) Priorité: 10.09.1998 FR 9811300
(71) Demandeur: LA SOUDURE AUTOGENE FRANCAISE, F-75007 Paris (FR)
(72) Inventeur: Briand, Francis, 75010 Paris (FR)
(74) Mandataire: Le Moenner, Gabriel

(57) **Abrégé**

Torche (1) de travail à l'arc électrique comportant un corps (6) de torche ayant au moins une extrémité aval et comprenant au moins une source (7) de rayonnement UV, au moins une partie de ladite source de rayonnement UV étant agencée, au moins partiellement, à l'intérieur du corps (6) de torche et au voisinage de ladite extrémité aval dudit corps (6). de torche, ladite source (7) de rayonnement UV étant au contact direct ou à proximité immédiate d'au moins une pièce (5) électriquement conductrice susceptible d'être portée, au moins temporairement, à un potentiel électrique non nul.

## Description

La présente invention se rapporte à une torche manuelle ou automatique de travail à l'arc électrique sous flux gazeux de protection mettant en oeuvre un amorçage haute fréquence pour créer l'arc électrique.

Par travail à l'arc électrique, on entend toute opération ou tout procédé de soudage, coupage, traitement thermique ou analogues.

La technique de soudage à l'arc électrique sous flux gazeux de protection repose sur l'établissement d'un arc électrique entre une cathode et une anode.

Il existe actuellement deux façons différentes pour produire ou amorcer l'arc électrique, à savoir l'amorçage par court-circuit et l'amorçage dit HF (pour Haute Fréquence).

De façon schématique, la technique de l'amorçage par court-circuit consiste à mettre en contact la cathode et l'anode, de sorte de créer, lors de l'établissement du court-circuit, un appel de courant qui vient échauffer les deux extrémités en regard l'une de l'autre, à savoir l'extrémité de l'anode et l'extrémité de la cathode.

En effectuant ensuite, un éloignement progressif des deux extrémités l'une de l'autre, il se produit un arc électrique entre celles-ci.

L'amorçage par court-circuit est utilisé notamment dans les procédés de soudage TIG (pour Tungsten Inert Gas), dans lesquels la cathode est une électrode en tungstène et l'anode est la ou les pièces à souder.

Cette technique de l'amorçage par court-circuit peut également être utilisée dans les procédés de soudage MIG (pour Metal Inert Gas), dans lesquels la cathode est un fil fusible, par exemple, un fil fourré, et l'anode est, là encore, la pièce à souder. Toutefois, en soudage MIG il n'est pas nécessaire d'éloigner le fil lors de l'établissement du court-circuit étant donné que l'intensité du courant électrique suffit à faire fondre son extrémité et permet donc l'établissement de l'arc électrique.

L'amorçage par court-circuit est aussi utilisé en coupage plasma et dans certains procédés de traitement de surface.

Cependant, ce procédé d'amorçage par court-circuit a l'inconvénient de nécessiter, lors de chaque court-circuit, un contact entre la cathode et l'anode d'où il résulte une détérioration de ces deux éléments, nécessitant leur remplacement plus ou moins rapide.

Par exemple, en soudage TIG, un amorçage par court-circuit nécessite le réaffûtage fréquent de l'électrode en tungstène utilisée comme cathode. En outre, il arrive parfois que l'on retrouve subséquemment des inclusions de tungstène dans le cordon de soudure, ce qui peut être très préjudiciable aux propriétés mécaniques de cette dernière.

L'amorçage haute fréquence (HF) ne nécessite pas de contact entre l'anode et la cathode, et est basé sur des impulsions de haute tension.

Pour des raisons de coûts et de sécurité, on génère une haute tension telle que chacune des impulsions soit une oscillation amortie de haute fréquence. En pratique, plus la distance entre la cathode et l'anode est importante, plus l'amplitude de la haute tension nécessaire à l'établissement de l'arc électrique augmente.

L'amorçage haute fréquence est utilisé notamment en soudage TIG, en découpe plasma et en soudage plasma. En soudage plasma, l'arc est amorcé d'abord entre deux électrodes constituées, par exemple, par deux parties de la tête de torche, puis transféré ensuite à la pièce à souder par le flux gazeux.

Il est aussi possible d'utiliser l'amorçage HF en soudage MIG, TIG ou plasma, en particulier en MIG, TIG ou plasma à polarité variable, où lors de chaque alternance du courant, la tension s'annulant, il peut être nécessaire de réamorcer l'arc électrique.

Cependant, l'amorçage HF présente également certains inconvénients.

Ainsi, la mise en oeuvre de haute fréquence est une source importante de bruits électromagnétiques pouvant perturber notablement l'environnement électrique du soudeur et faisant l'objet d'une réglementation de plus en plus sévère. Le niveau de perturbation étant proportionnel à la puissance mise en jeu pendant la phase d'amorçage, il convient de minimiser l'amplitude de la haute tension nécessaire à l'établissement de l'arc et ce, quel que soit le procédé de soudage à amorçage HF.

Actuellement, pour pallier ce problème, il est d'usage, d'une part, de réduire la distance entre l'anode et la cathode et, d'autre part, d'utiliser, lorsque c'est possible, une cathode ou une anode à extrémité pointue.

Cependant, la mise en oeuvre pratique de cette technique n'est pas chose aisée. En effet, en soudage manuel, par exemple en soudage TIG manuel, l'opérateur est obligé de positionner précisément l'électrode par rapport à la pièce à souder, ce qui est rendu difficile par le port d'un masque de soudage qui l'empêche de voir précisément ce qu'il fait.

Or, un mauvais positionnement de l'électrode par rapport à la pièce à souder conduit à une amplitude de haute tension soit insuffisante pour amorcer l'arc ou, à l'inverse, nécessitant des temps d'amorçage excessifs.

Pour y remédier, il est alors indispensable de générer des impulsions d'amplitude plus importante permettant un amorçage de l'arc avec des tolérances plus grandes, d'une part, sur la distance séparant l'électrode de la pièce à souder et, d'autre part, sur l'affûtage de l'électrode, mais générant, par ailleurs, un bruit électromagnétique plus important.

Une alternative pour l'opérateur réside dans l'utilisation d'un masque de soudage muni d'une vitre à cristaux liquides dont la polarité varie en fonction de la phase de soudage : phase de soudage proprement dite avec émission de lumière aveuglante ou phase d'arrêt avec repositionnement de l'électrode. Cependant, ce type de masque est très cher et ne permet pas, malgré tout, de résoudre le problème lorsque le soudage est effectué dans un endroit sombre.

En outre, on sait qu'il est possible : d'augmenter l'efficacité de l'amorçage de l'arc électrique en jouant notamment sur une augmentation de la tolérance dans le positionnement de l'électrode par rapport à la pièce à souder, de diminuer le bruit électromagnétique et l'amplitude de la haute tension dans les procédés de soudage à amorçage HF, d'obtenir un positionnement plus facile de l'électrode par rapport à la pièce à souder et ce, même dans les endroits sombres, et augmenter ainsi le confort du soudeur ; et d'éviter l'investissement que représente un masque muni d'une vitre à polarité variable et réduire ainsi le coût global du soudage, lorsque, durant l'opération ou le travail à l'arc électrique sous flux gazeux de protection, on éclaire la zone de soudage au moyen d'une source de lumière artificielle émettant un rayonnement ultraviolet (rayons UV), de préférence, d'une longueur d'onde comprise entre 180 et 300 nm. De tels procédé et dispositif sont notamment décrits dans le document FR n° 9708500, incorporé ici par références.

Cependant, pour pouvoir éclairer correctement et efficacement la zone de travail avec les rayons UV, il est nécessaire que le rayonnement UV soit émis au voisinage, c'est-à-dire dans la périphérie, de l'anode et de la cathode. Se pose alors le problème du choix de la source de rayons UV, de son mode d'alimentation, de son emplacement et/ou, éventuellement, du mode d'acheminement des rayons UV depuis cette source de rayons UV jusqu'à la zone éclairée.

Dans le cadre de certaines applications ou installations automatiques, dans lesquelles l'encombrement de la torche n'est pas rédhibitoire, il peut être remédié à ce problème en plaçant directement la source de rayons UV au voisinage immédiat de la torche.

Toutefois, cette solution n'est pas applicable lorsque l'application nécessite de réduire au maximum l'encombrement immédiat de la torche, comme c'est le cas, notamment, pour une torche de type manuel.

Il s'ensuit alors que, pour de telles applications, il est nécessaire de délocaliser la source de rayons UV, c'est-à-dire de l'éloigner de la torche en l'incorporant, en général, au générateur de courant et en acheminant le rayonnement jusqu'au niveau de la torche par l'intermédiaire de fibres optiques. De tels dispositifs sont notamment décrits dans les documents US-A-5,329,089 et JP-A-63188472.

Or, délocaliser la source de rayons UV engendre l'utilisation de fibres optiques, ce qui est un sérieux handicap du point de vue industriel, compte tenu du prix élevé des fibres optiques capables d'acheminer des rayons UV.

En outre, l'utilisation de fibres optiques engendre une atténuation non négligeable et non acceptable du rayonnement UV, d'autant plus importante que la longueur de fibre nécessaire est grande.

Par ailleurs, la mise en oeuvre de fibres optiques peut aussi augmenter la complexité de l'installation.

Le but de la présente invention est alors de résoudre les problèmes précités en proposant une torche de travail à l'arc électrique comportant des moyens d'émission de rayonnement UV, mais ne requérant ni l'utilisation de fibres optiques, ni une délocalisation de la source de rayons UV, laquelle torche étant, en outre, d'encombrement réduit, de manière à pouvoir être utilisée tant dans une opération de travail à l'arc de type automatique que de type manuel.

La présente invention concerne alors une torche de travail à l'arc électrique comportant un corps de torche ayant au moins une extrémité aval et comprenant au moins une source de rayonnement UV, au moins une partie de ladite source de rayonnement UV étant agencée, au moins partiellement, à l'intérieur du corps de torche et au voisinage de ladite extrémité aval dudit corps de torche, ladite source de rayonnement UV étant au contact direct ou à proximité immédiate d'au moins une pièce électriquement conductrice susceptible d'être portée, au moins temporairement, à un potentiel électrique non nul.

Selon l'invention, la source UV étant incorporée directement au niveau de l'extrémité aval de la torche et à proximité immédiate ou au contact direct d'une pièce au potentiel électrique de l'électrode ou de ladite électrode, il est possible de passer outre l'utilisation de toute fibre optique ou de câble d'alimentation électrique de ladite source UV, et donc d'éviter les inconvénients et les problèmes susmentionnés.

En d'autres termes, la torche selon l'invention présente un avantage incontestable, à savoir qu'elle ne nécessite pas d'alimentation auxiliaire en courant électrique de la source UV, étant donnée que celle-ci est alimentée directement par le courant électrique de fuite présent lors de la génération de la haute tension servant à l'amorçage de l'arc entre la cathode et l'anode, c'est-à-dire l'électrode et la pièce à souder, respectivement, dans le cas d'un procédé de soudage TIG. Pour ce faire, selon l'invention, la source de rayonnement UV est placée au contact direct ou à proximité immédiate d'une pièce électriquement conductrice du corps de torche, tel le siège de pince, ladite pièce étant reliée à des moyens d'alimentation en courant électrique et étant susceptible d'être portée au potentiel électrique de ladite électrode. Ceci permet d'obtenir un allumage automatique de la source de rayons UV, donc un éclairage UV, dès l'instant où la tension d'amorçage est générée.

En outre, la torche selon l'invention peut comprendre l'une ou plusieurs des caractéristiques suivantes :
- la source de rayonnement UV comporte :
   - au moins une enveloppe externe, ladite enveloppe externe étant au contact direct ou à proximité immédiate d'au moins ladite pièce électriquement conductrice, et
   - au moins un filament-électrode interne, ledit au moins un filament-électrode étant relié à la terre par des moyens de connexion ;
- ladite pièce électriquement conductrice est au moins une partie du siège de pince ou de la pince porte-électrode susceptible d'alimenter en courant électrique une électrode de soudage ;
- la source de rayonnement UV comporte au moins deux filaments-électrodes ;
- la source de rayonnement UV est une lampe à décharge luminescente, de préférence une lampe à décharge luminescente renfermant au moins un gaz à une pression inférieure à la pression atmosphérique et/ou fonctionnant sous une tension moyenne d'environ 100 V à 1 000 V et/ou un courant moyen d'environ 50 µA à 1 A ;
- la source de rayonnement UV est insérée- dans un logement situé entre la paroi externe du corps de torche et la paroi de la pièce électriquement conductrice, de préférence le siège de pince ;
- la pièce électriquement conductrice est en contact avec une électrode de soudage et en ce que ladite pièce électriquement conductrice est portée, au moins temporairement, au potentiel électrique de ladite électrode ;
- elle est choisie parmi les torches de soudage TIG ou plasma, et les torches de coupage plasma, de préférence une torche de soudage TIG.

L'invention concerne une installation automatique de travail à l'arc électrique, en particulier de soudage ou de coupage de matériaux métalliques, comprenant :
- au moins une torche selon l'invention,
- au moins une source de courant électrique alimentant ladite torche en courant électrique,
- au moins une source de gaz,
- au moins un châssis-porteur portant au moins ladite torche,
- des moyens de déplacement de la torche permettant de déplacer au moins ladite torche selon au moins un axe de déplacement, de préférence selon au moins deux axes de déplacement ; et
- des moyens de pilotage susceptibles de commander au moins les moyens de déplacement.

Une torche selon l'invention peut être utilisée dans tout procédé de soudage TIG ou plasma, ou un procédé de coupage plasma d'au moins une pièce métallique, de préférence une pièce en aluminium, en alliage d'aluminium ou en acier inoxydable.

La présente invention va maintenant être décrite plus en détail à l'aide des figures annexées et d'un exemple, donnés à titre illustratif mais non limitatif.

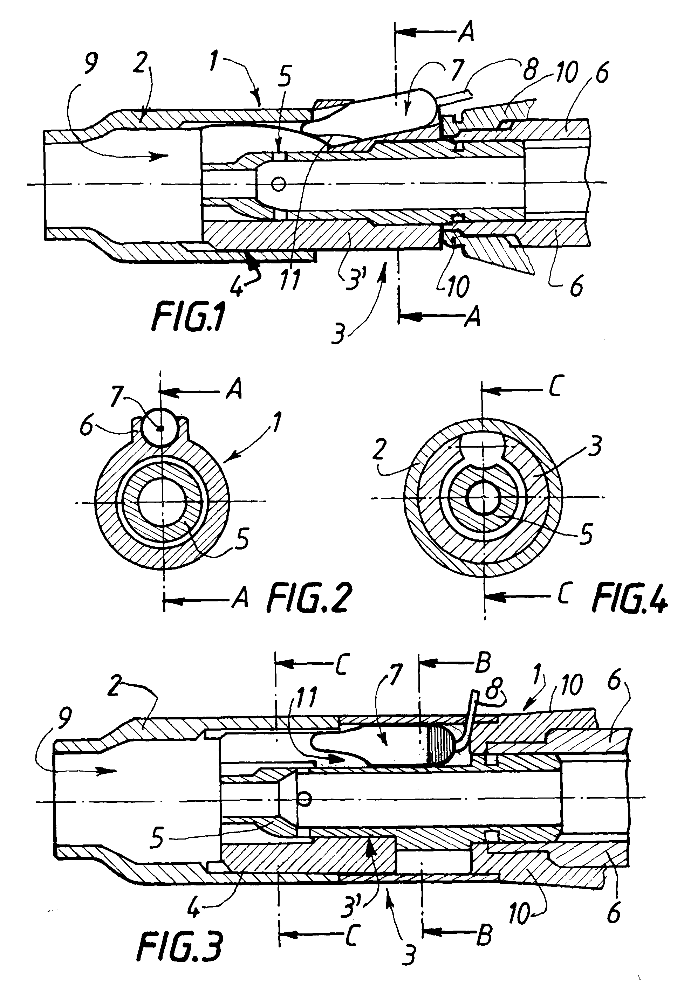

La figure 1 représente un schéma en coupe longitudinale partielle d'un premier mode de réalisation d'une torche 1 de soudage TIG (pour Tungsten Inert Gas) de type manuel et conforme à l'invention, laquelle torche 1 est munie à son extrémité 3 aval d'une buse 2 fixée à une pièce 3' prolongeant le corps 6 de torche par le biais de moyens de fixation 4, tel un filetage ou analogue.

Durant une opération de soudage, le gaz de protection, par exemple de l'argon, de l'hélium ou leurs mélanges, est délivré par la buse 2, de façon à réaliser une protection gazeuse efficace du cordon de soudure.

En outre, la torche 1 comprend également, de manière classique, un siège de pince 5 amenant le courant jusqu'à une électrode ou un fil fusible de soudage (non représentés).

Le corps 6 de torche comporte un surmoulage 10 servant essentiellement à isoler électriquement la torche.

On voit sur la figure 1 qu'une source 7 de rayonnement UV est insérée dans un logement 11 du corps 6 de la torche 1, au niveau de l'extrémité 3 aval du corps 6 de torche, de manière à ce que le rayonnement UV à déboucher à l'intérieur 9 de la buse 2, au niveau de la portion amont de ladite buse 2.

En tant que source 7 de rayonnement UV, on peut choisir une petite lampe à décharge luminescente, telle la lampe de référence L4891 commercialisée par la Société Hamamatsu France. Classiquement, une lampe à décharge luminescente de ce type fonctionne sous une tension moyenne faible, par exemple de l'ordre de 300 V, et un courant moyen faible, par exemple 100 µA.

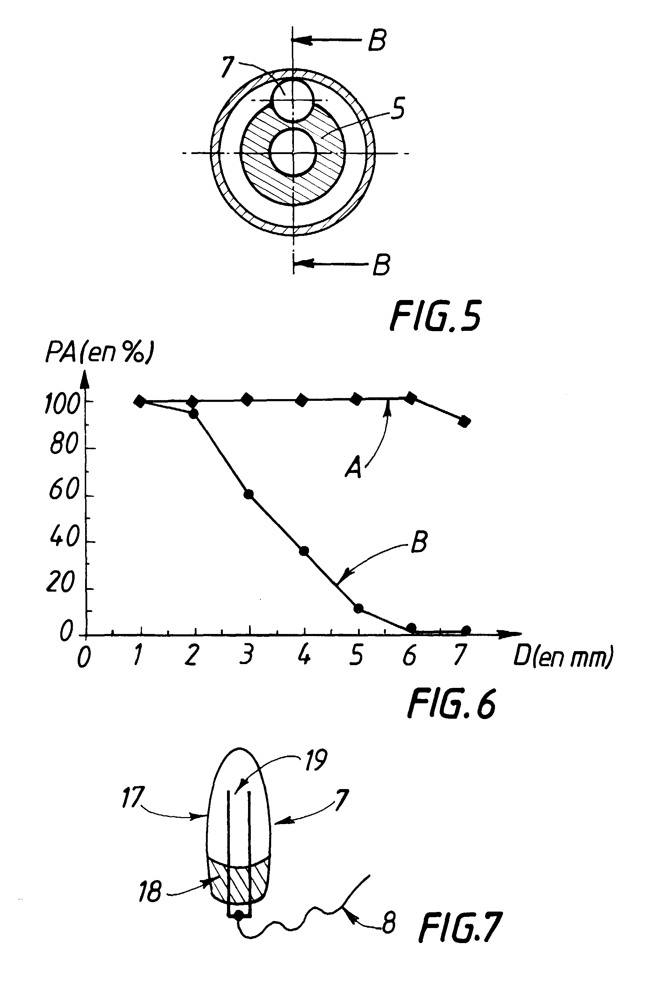

Une lampe à décharge luminescente est schématisée sur la figure 7 et se compose d'une partie-culot 18 surmontée d'une enveloppe externe 17 renfermant un gaz ou un mélange gazeux à une pression inférieure à la pression atmosphérique, tel un mélange de gaz rares contenant une petite quantité d'hydrogène, et deux filaments-électrodes 19 connectés, d'une part, l'un à l'autre et reliés, d'autre part, à la terre, par exemple à la terre d'un générateur de soudage.

Comme représenté sur la figure 1, la source 7 de rayons UV est reliée à la terre par l'intermédiaire d'un moyen de liaison électrique, tel un câble 8, lequel câble 8 est, de préférence, inséré dans le surmoulage 10.

Par contre, la source 7 de rayons UV n'est pas reliée par câble ou par un moyen analogue spécifique à une source de courant électrique d'alimentation. En effet, selon l'invention, la source 7 de rayons UV est située à proximité immédiate ou au contact d'une pièce électriquement conductrice, de préférence le siège de pince 5, au potentiel électrique de l'électrode ou du fil fusible de soudage. Dès lors, au moment de la génération de l'impulsion de haute-tension d'amorçage, par exemple une tension de 5 à 6 kV, il se crée un champ électrique important au voisinage de l'électrode, lequel est suffisant pour engendrer entre l'enveloppe externe 17 de la lampe UV et les deux filaments-électrodes 19, reliés à la terre par le câble 8, une différence de potentiel nécessaire et suffisante pour obtenir le passage d'un faible courant de fuite et ainsi un allumage de la lampe UV.

Plus précisément, lors de chaque impulsion de haute-tension, le champ électrique généré va ioniser le gaz contenu dans l'enveloppe 17 externe de la lampe 7 à UV et permettre ainsi une émission des rayons UV.

Il s'ensuit que, selon l'invention, on obtient un allumage automatique de la lampe UV simultanément à la génération de l'impulsion de haute-tension et ce, sans alimentation propre de la lampe UV et grâce à la proximité immédiat ou au contact de l'enveloppe externe 17 de la lampe UV avec une pièce métallique au potentiel électrique de l'électrode, en particulier le siège de pince 5.

La figure 2 représente une vue en coupe transversale de la torche 1 de la figure 1, selon le plan A-A, permettant de voir que la source 7 de rayonnement UV est incorporée, c'est-à-dire insérée, directement dans le corps 6 de torche.

La figure 3 est analogue à la figure 1, mais représente un deuxième mode de réalisation d'une torche 1 TIG manuelle selon l'invention, dans lequel la lampe 7 émettant un rayonnement UV est complètement insérée à l'intérieur du corps 6 de torche.

Ce deuxième mode de réalisation présente l'avantage de conduire à une torche 1 plus compacte, étant donné que la lampe 7 est totalement incluse à l'intérieur du corps 6 de torche, ainsi que montré sur la figure 5, qui est un schéma en coupe transversale selon le plan C-C de la torche de la figure 3, alors que selon le mode de réalisation des figures 1 et 2, la lampe 7 fait légèrement saillie vers l'extérieur du corps 6 de torche.

En outre, la figure 4 représente une vue schématique en coupe transversale selon le plan B-B de la figure 3.

Quel que soit le mode de réalisation considéré (figure 1 ou figure 3), la lampe 7 n'a pas alimentation électrique indépendante mais est reliée ou mise en contact avec une pièce électriquement conductrice comprise dans le corps 6 de torche et qui est elle-même au même potentiel électrique que l'électrode de soudage.

Le câble 8 de liaison à la terre est relié directement à la terre de la torche 1 lorsque cela est possible ou, le cas échéant, à la terre du générateur de courant alimentant la torche 1. Dans ce cas, il est alors préférable d'incorporer le câble 8 au faisceau de câbles existant classiquement et destiné à relier la torche au générateur de courant.

L'intérêt d'une torche selon l'invention va maintenant être mieux compris à l'aide de l'exemple comparatif donné ci-après.

### EXEMPLE

Cet exemple vise à montrer l'efficacité d'une torche de travail à l'arc conforme à l'invention.

La torche utilisée est une torche de soudage telle que décrite ci-avant et schématisée sur la figure 2.

Le protocole expérimental suivi consiste à comparer la probabilité d'amorçage PA d'un arc électrique en présence (courbe A) ou, selon le cas, sans (courbe B) mise en oeuvre d'un éclairage par un rayonnement UV de longueur d'onde d'environ 254 nm et ce, pour différentes distances D anode/cathode (en mm).

Pour chaque valeur de distance anode/cathode, on effectue 20 tentatives d'amorçage avec ou sans éclairage UV, puis on détermine la probabilité d'amorçage exprimée en calculant le rapport du nombre de tentatives (ici 20) à chaque distance anode/cathode, c'est-à-dire la distance électrode/pièce à souder. La torche est supportée par une crémaillère, ce qui permet un réglage fin de la distance électrode/pièce.

L'extrémité de l'électrode a été taillée suivant un angle précis, environ 60°, et, à chaque fois qu'une tentative d'amorçage a lieu, on attend environ une minute avant un nouvel essai afin de permettre un refroidissement de l'électrode.

Par ailleurs, du fait du mode de génération de la tension HF, il existe, pour un même réglage de l'éclateur, une disparité dans les valeurs de haute tension obtenues. Afin de tenir compte de cet effet, les valeurs de tension ont été moyennées sur les 20 tentatives d'amorçage qui correspondent à un même réglage de l'éclateur. A titre d'exemple, le réglage nominal de l'éclateur interne du poste de soudure PRESTOTIG 250, commercialisé par la société LA SOUDURE AUTOGENE FRANCAISE et utilisé dans ces essais, permet de développer une tension HF de l'ordre de 12 kV crête à crête.

En outre, le gaz de protection utilisé est de l'argon commercialisé par la Société L'AIR LIQUIDE.

Les résultats des essais ont été consignés sur la figure 6 où l'on voit que la mise en oeuvre du dispositif d'éclairage UV selon l'invention permet d'obtenir une probabilité d'amorçage d'environ 100 % (courbe A) et ce, jusqu'à une distance D anode/cathode d'environ 6 mm, alors qu'en l'absence d'éclairage UV, la probabilité d'amorçage n'est plus que de 50 % à une distance D de seulement 3,5 mm environ.

De là, le fait d'éclairer la zone de soudage avec un rayonnement UV permet d'accroître considérablement la souplesse opératoire de l'amorçage haute fréquence, étant donné que l'amorçage est assuré même lorsque la distance entre les électrodes augmente. L'opérateur peut alors se contenter d'un positionnement moins précis des électrodes, l'une au regard de l'autre.

En d'autres termes, le fait de soumettre la zone de soudage à un rayonnement UV permet aussi une diminution de l'amplitude de haute tension et donc aussi une diminution notable du bruit électromagnétique généré par la haute fréquence et ce, sans requérir de modification du positionnement de la cathode par rapport à l'anode.

## Revendications

1. Torche (1) de travail à l'arc electrique comportant un corps (6) de torche avant au moins une extrémité aval et comprenant au moins une source (7) de rayonnement UV, au moins une partie de ladite source de rayonnement UV étant agencée, au moins partiellement, à l'intérieur du corps (6) de torche et au voisinage de ladite extrémité aval dudit corps (6) de torche, ladite source (7) de rayonnement UV étant au contact direct ou à proximité immédiate d'au moins une pièce (5) électriquement conductrice susceptible d'âcre portée, au moins temporairement, à un potentiel électrique non nul.

2. Torche selon la revendication 1, caractérisée en ce que la source (7) de rayonnement UV comporte :
- au moins une enveloppe (17) externe, ladite enveloppe externe (17) étant au contact direct ou à proximité immédiate d'au moins ladite pièce (5) électriquement conductrice, et
- au moins un filament-électrode (19) interne, ledit au moins un filament-électrode (la) étant relié à la terre par des moyens de connection (8).

3. Torche selon l'une des revendications 1 ou 2, caractérisée en ce que ladite pièce (5) électriquement conductrice est au moins une partie du siège de pince susceptible d'alimenter en courant électrique une électrode de soudage.

4. Torche selon la revendication 2, caractérisée en ce que la source (7) de rayonnement UV comporte au moins deux filaments-électrodes (19).

5. Torche selon l'une des revendications 1 à 4, caractérisée en ce que la source (7) de rayonnement UV est une lampe à décharge luminescente, de préférence une lampe à décharge luminescente renfermant au moins un gaz à une pression inférieure à la pression atmosphérique et/ou fonctionnant sous une tension moyenne d'environ 100 V à 1 000 V et/ou un courant moyen d'environ 50µA à 1 A.

6. Torche selon l'une des revendications 1 à 5, caractérisée en ce que la source (7) de rayonnement UV est insérée dans un logement (11) situé entre la paroi externe du corps (6) de torche et la paroi de la pièce (5) électriquement conductrice, de préférence le siège de pince.

7. Torche selon l'une des revendications 1 à 6, caractérisée en ce que la pièce (5) électriquement conductrice est en contact avec une électrode de soudage et en ce que ladite pièce (5) électriquement conductrice est portée, au moins temporairement, au potentiel électrique de ladite électrode.

8. Torche selon l'une des revendications 1 à 7, caractérisée en ce qu'elle est choisie parmi les torches de soudage TIG ou plasma, et les torches de coupage plasma, de préférence une torche de soudage TIG.

9. Installation automatique de travail à l'arc électrique, en particulier de soudage ou de coupage de matériaux métalliques, comprenant :
- au moins une torche selon l'une des revendications 1 à 8,
- au moins une source de courant électrique alimentant ladite torche en courant électrique,
- au moins une source de gaz,
- au moins un châssis-porteur portant au moins ladite torche,
- des moyens de déplacement de la torche permettant de déplacer au moins ladite torche selon au moins un axe de déplacement, de préférence selon au moins deux axes de déplacement ; et
- des moyens de pilotage susceptibles de commander au moins les moyens de déplacement.

10. Utilisation d'une torche de travail à l'arc électrique selon l'une des revendications 1 à 9 dans un procédé de soudage TIG ou plasma, ou un procédé de coupage plasma d'au moins une pièce métallique, de préférence une pièce en aluminium, en alliage d'aluminium ou en acier inoxydable.
